(19) **Europäisches Patentamt**
**European Patent Office**
**Office européen des brevets**

(11) **EP 4 752 717 A2**

(12) **EUROPEAN PATENT APPLICATION**
published in accordance with Art. 153(4) EPC

(43) Date of publication:
03.06.2026 Bulletin 2026/23

(21) Application number: 24845730.1

(22) Date of filing: 18.04.2024

(51) International Patent Classification (IPC):
*G06F 9/455* (2018.01)          *H04L 9/40* (2022.01)
*G06F 21/60* (2013.01)          *G06F 21/53* (2013.01)
*G06F 21/57* (2013.01)

(52) Cooperative Patent Classification (CPC):
G06F 9/455; G06F 21/53; G06F 21/57; G06F 21/60;
H04L 9/40

(86) International application number:
PCT/KR2024/005223

(87) International publication number:
WO 2025/023426 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.07.2023  KR 20230098216
27.07.2023  KR 20230168507

(71) Applicant: Secuve Co., Ltd.
Seoul 08390 (KR)

(72) Inventors:
• HONG, Ki Yoong
Seoul 06966 (KR)
• PARK, Jung Soo
Daejeon 34876 (KR)
• YANG, Jeong Woo
Seoul 08518 (KR)

(74) Representative: Jung, Minkyu
Wuesthoff & Wuesthoff
Patentanwälte und Rechtsanwalt PartG mbB
Schweigerstraße 2
81541 München (DE)

(54) **CONTAINER-BASED CLOUD ACCESS CONTROL SYSTEM AND METHOD**

(57) The present disclosure relates to an access control system and method for security control in a cloud service environment, and more particularly, to a container-based cloud access control system and method that clusters processes and threads created in a container environment according to container attribute information and performs access control on all behaviors of the processes according to a security policy configured for each cluster.

Fig. 1

## Description

## Technical Field

The present disclosure relates to an access control system and method for security control in a cloud service environment, and more particularly, to a container-based cloud access control system and method that clusters processes and threads (hereinafter collectively referred to as "processes") created in a container environment according to container attribute information and performs access control on all behaviors of the processes according to a security policy configured for each cluster.

## Background Art

Currently, container-based application development and operation in cloud environments have been rapidly adopted due to advantages such as portability, scalability, efficiency, continuous integration (CI), continuous delivery & continuous deployment (CD), automation, etc.

Container technology provides an isolated virtual space at the operating system level using namespaces and control groups (cgroups). Since containers share an operating system (OS), kernel, and devices, rather than virtualizing device or kernel, they isolate virtualized spaces using namespaces, and limit hardware resources, such as CPU and memory, through control groups, thereby enabling the operation of two or more systems.

In general, access control security technologies are applied to computer systems, such as desktops and servers, to restrict access to information based on security policies for the protection of stored information.

However, these general access control security technologies are applied in a single environment by a single operating system, and thus are difficult to apply to container environments.

Due to these limitations, conventional container environments provide whitelist-based system call control. For example, SECCOMP (Secure Computing Mode) creates, as a profile, a list of trusted system calls to be allowed and applies the profile when a container is executed.

However, applications within the container inevitably require system calls such as execute, read, write, and create for operation. Accordingly, when such system calls are included in the list of trusted system calls, an unauthorized application within the container may bypass existing security controls.

In addition, security control based on control groups (cgroups) in a container environment is limited to restricting allocation of system resources of a container. Further, security control based on namespaces cannot distinguish processes according to container attribute information, thereby causing limitations in enforcing security control. The container attribute information refers to container-related information of a process created in the container environment and includes a container ID, a container image ID, a Pod name, and a Label name.

Therefore, there is a need for a new access control scheme capable of controlling behaviors of all processes created in a container environment according to a security policy based on container attribute information.

## Disclosure of the Invention

## Technical Goals

Accordingly, an object of the present disclosure is to provide a container-based cloud access control system and method for security control in a cloud service environment, which clusters processes created in a container environment according to container attribute information and performs access control on all behaviors of the processes according to a security policy configured for each cluster.

## Technical Solutions

In order to achieve the above object, a container-based cloud access control system, including one or more containers executed by a container image, and a container engine configured to assign Pods and Labels to the containers, and to deploy and manage at least one of the containers or the Pods, comprising: an application layer including one or more containers and a container engine, and configured to collect and manage container attribute information related to both the containers and the Pods through the container engine, set security policies for clusters corresponding to the container attribute information, and perform an execution request for an arbitrary container through the container engine; and a kernel layer configured to cluster, according to the container attribute information, a container initial process created in response to the container execution request and all processes created within the container, and perform access control on behaviors of all processes within the container according to the security policy set for each cluster

The container attribute information comprises a container ID, a container image ID, a Pod name, and a Label name, which represent container-related information of a process in a container environment, and wherein the application layer comprises: the one or more containers; the container engine; a container operation environment monitoring unit configured to collect and manage the container attribute information for one or more containers executed through the container engine; and a security policy management unit configured to collect information about clusters created through the kernel layer when a security policy setting event occurs, and set a security policy for each cluster by receiving input from an administrator.

The kernel layer comprises a system call interface unit configured to provide an interface for system calls and responses thereto between the application layer and the kernel layer; a process creation unit configured to create a process when a container execution event is generated by the container engine through the system call interface unit, or when a process creation event occurs within the container; a security kernel unit configured to monitor the system call interface unit to detect container execution and termination requests from the container engine, cluster all processes created through the process creation unit within the container, according to the container attribute information acquired through the container operation environment monitoring unit, and perform access control on all behaviors of the processes within the container according to the security policy set for each cluster; and an OS kernel unit configured to interface with a hardware layer comprising hardware that stores information resources according to access control of the security kernel unit

The security kernel unit comprises a container cluster management unit configured to manage creation and removal of clusters; a container event monitoring unit configured to monitor system calls generated by the container engine through the system call interface unit to detect execution and termination of the container, cluster all the processes created through the process creation unit within the container according to the container attribute information acquired through the container operation environment monitoring unit, and remove the cluster when the container is terminated; and a container access control unit configured to perform access control on all the behaviors of the processes within the container according to the security policy set for each cluster.

The container cluster management unit comprises a cluster allocation unit configured to create a cluster in response to control by the container event monitoring unit; a cluster removal unit configured to remove a cluster in response to control by the container event monitoring unit; and a cluster retrieval unit configured to retrieve and return a cluster according to container attribute information in response to a cluster retrieval request from either the container event monitoring unit or the security policy management unit.

The container event monitoring unit comprises a container execution monitoring unit configured to monitor the system call interface unit and detect container execution and termination requests from the container engine; and a container clustering unit configured to cluster all the processes created through the process creation unit within the container, according to the container attribute information acquired through the container operation environment monitoring unit.

The container access control unit comprises a container process behavior detection unit configured to monitor the system call interface unit to detect creation and termination of processes within the container and behavior events of the processes, and perform clustering through the container clustering unit when a process is created or terminated; a security policy retrieval unit configured to load and retrieve the security policy for each cluster from the hardware layer; and an access control execution unit configured to perform access control according to the security policy for each cluster when behavior events of the processes within the container occur.

In order to achieve the above object, a container-based cloud access control method performed in a system including one or more containers executed by a container image and a container engine configured to assign Pods and Labels to the containers, and to deploy and manage at least one of the containers or the Pods, the container-based cloud access control method comprising: a security policy setting process in which an application layer including one or more containers and the container engine collects and manages container attribute information related to both the containers and the Pods through the container engine, and sets security policies for clusters corresponding to the container attribute information; a clustering process in which a security kernel unit of a kernel layer clusters, according to the container attribute information, a container initial process created in response to a container execution request and all processes created within the container through a container event monitoring unit; and an access control process in which the security kernel unit of the kernel layer performs access control on behaviors of all processes within the container according to the security policy set for each cluster through a container access control unit.

The container attribute information comprises a container ID, a container image ID, a Pod name, and a Label name, which represent container-related information of a process in a container environment, and wherein the security policy setting process comprises: a container operation environment monitoring step in which the application layer collects and manages the container attribute information for one or more containers executed by the container engine through a container operation environment monitoring unit; and a security policy setting step in which the application layer sets the security policy for each cluster, through a security policy management unit, by receiving input from an administrator when a security policy setting event occurs.

The clustering process comprises a process creation step in which the kernel layer creates a process by a process creation unit when a container execution event is generated by the container engine through a system call interface unit or when a process creation event occurs within the container; and a clustering step in which the security kernel unit of the kernel layer monitors the system call interface unit to detect container execution and termination requests from the container engine, and clusters all processes created through the process creation unit within the container, according to the container attribute information acquired through the container operation environment monitoring unit.

The clustering step comprises a container execution detection step in which the security kernel unit detects container execution from the container engine through the system call interface unit; a process creation detection step in which the security kernel unit detects creation of all processes within the container; a container attribute information acquisition step in which the security kernel unit acquires container attribute information for all the processes through the container operation environment monitoring unit; a cluster creation step in which the security kernel unit clusters all the processes according to the acquired container attribute information; and a cluster removal step in which the security kernel unit remove the cluster through a container cluster management unit when container termination is detected through a container execution monitoring unit.

The access control process comprises a container process behavior detection step in which a container process behavior detection unit of the container access control unit monitors creation and termination of all processes within the container and occurrence of behavior events of the processes through the system call interface unit; a security policy retrieval step in which a security policy query unit of the container access control unit loads and retrieves a security policy for each cluster from a hardware layer; and an access control execution step in which access control is performed according to the security policy for each cluster when behaviors of the processes within the container occur, thereby allowing or blocking corresponding process behaviors.

**Advantageous Effects**

The present disclosure provides an effect of enhancing security of container-based cloud services by clustering processes created in a container environment based on container attribute information, and performing access control on all behaviors of the processes according to a security policy set for each cluster.

Brief Description of Drawings

FIG. 1 is a diagram illustrating a configuration of a container-based cloud access control system according to the present disclosure.
FIG. 2 is a diagram illustrating a configuration of a security kernel unit of a kernel layer in a container-based cloud access control system according to the present disclosure.
FIG. 3 is a flowchart illustrating a container-based cloud access control method according to the present disclosure.

**Best Mode for Carrying Out the Invention**

Hereinafter, with reference to the accompanying drawings, the configuration and operation of the container-based cloud access control system according to the present disclosure will be described in detail, and the access control method of the system will also be described.

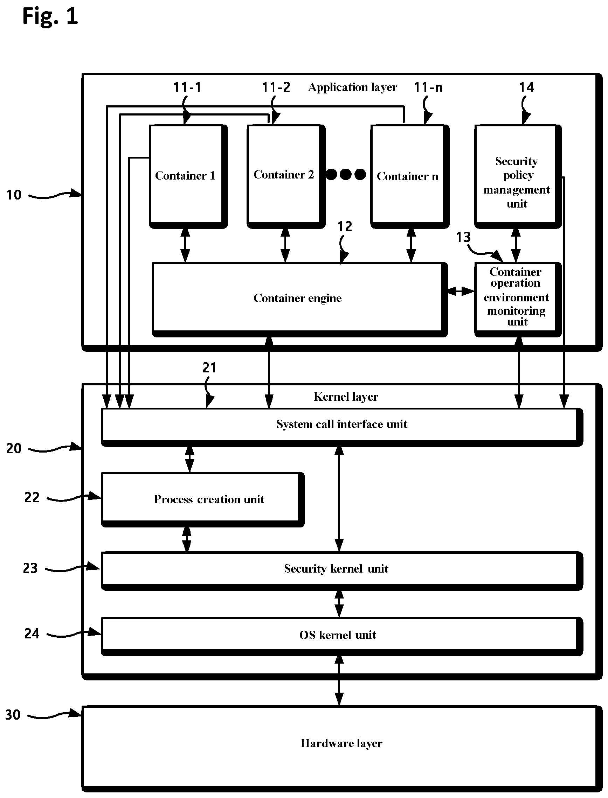

FIG. 1 is a diagram illustrating a configuration of a container-based cloud access control system according to the present disclosure.
Referring to FIG. 1, the container-based cloud access control system includes an application layer 10, a kernel layer 20, and a hardware layer 30.
The hardware layer 30 may include a display device such as a liquid crystal display (LCD), an input device such as a keyboard, a communication device configured to perform data communication via a network, and a storage device such as a hard disk and RAM configured to store various information. The hardware layer 30 may display and store information input from the kernel layer 20, read and output stored information in response to a request from the kernel layer 20, or modify or delete information in response to a request from the kernel layer 20.
The application layer 10 includes a plurality of applications installed and operated therein, and provides a container environment comprising a plurality of containers 11 and a container engine 12 according to the present disclosure. The container 11 is created by execution of a container image. The container image has a container image ID, and the container has a container ID. The container 11 includes one or more applications therein and generates events according to the execution of the applications and information access behaviors such as reading, writing, and deleting information of the application.
The container engine 12 may be Kubernetes (K8s), or the like. The container engine 12 includes one or more containers, and, in the case of Kubernetes, manages Labels and Pods including one or more containers by creating and removing, and enables the deployment of the containers and Pods.

Depending on a required deployment environment, the container engine 12 may establish a container environment comprising only one or more containers, or may establish a container environment comprising a Pod that includes one or more containers.

The container engine 12 stores and manages container-related information such as a container ID, a container image ID, a Pod name, and a Label name for each of the containers constituting the container environment.

The container operation environment monitoring unit 13 collects and manages container attribute information for one or more containers 11 executed by the container engine 12. The container attribute information includes a container ID, a container image ID, a Pod name, and a Label name, which represent container-related information of a process created in the container environment.

The container attribute information may include only a container ID and a container image ID, may include a container ID, a container image ID, and a Pod name, or may include a container ID, a container image ID, a Pod name, and a Label name, depending on the existence of a Pod including the executed container 11 and the existence of a Label for the Pod exists.

The process set (P) is defined as shown in Equation 1.

[Equation 1]

$$P = \left\{ p_{pid} \mid 0 \leq pid \leq (n-1) \right\}$$

Here, pid denotes a process ID, and $P_{pid}$ denotes a process having the process ID pid.

The security policy management unit 14 provides a security policy setting user interface through the input/output devices of the kernel layer 20 and the hardware layer 30 when a security policy setting event occurs.

The security policy management unit 14 displays, via the security policy setting user interface, container attribute information managed through the container engine 12 or input by an administrator.

The security policy management unit 14 will display, via the security policy setting user interface, information on clusters according to container attribute information created in the kernel layer 20 by the execution of the initial process through the container operation environment monitoring unit 13.

The security policy management unit 14 sets the security policy for each cluster by assigning or removing the security policy for each cluster selected by the administrator through the security policy setting user interface. The security policy will be stored in the storage device of the hardware layer 30.

The security policy consists of a list of permissions (networking permissions, program execution permissions, file system access permissions, process signal control permissions, process force termination permissions, system resource use permissions, file system sharing permissions, etc.) for all process behaviors within the container (process creation, process termination, network traffic transmission/reception, command and program execution, file system access, process signal reception, process force termination, file system sharing and shared file system access, system resource use permissions, etc.).

A set of clusters is defined as C as shown in Equation 2.

[Equation 2]

$$C = \left\{ C_{cid} \mid 1 \leq cid \leq m \right\}$$

Here, cid denotes a cluster ID, and $C_{cid}$ denotes a cluster having the cluster ID cid.

A set of processes included in a cluster ($C_{cid}$) is defined as ClusterPSet$_{cid}$ as shown in Equation 3.

[Equation 3]

$$ClusterPSet_{cid} = \left\{ cp_{ij} \mid c_i \in C, p_j \in P, i = cid, 0 \leq j \leq (n-1) \right\}$$

Here, $cp_{ij}$ denotes a process $p_j$ included in a cluster $c_i$, where i is a cluster ID and j is a process ID.

A cluster identification tag is defined as ctag in the form of a tuple as shown in Equation 4.

[Equation 4]

$$ctag = (type, flag)$$

$$type \in \{ct, ctimg, pod, label\}$$

$$flag = \begin{cases} id_{ct}, & type = ct \\ id_{ctimg}, & type = ctimg \\ name_{pod}, & type = pod \\ name_{label}, & type = label \end{cases}$$

Here, type denotes the type of the cluster identification tag (ctag), where ct denotes a container, ctimg denotes a container image, pod denotes a Pod, and label denotes a Label.

Further, flag denotes a container attribute information value corresponding to the type of the cluster identification tag (ctag), where $id_{ct}$ denotes a container ID, $id_{ctimg}$ denotes a container image ID, $name_{pod}$ denotes a Pod name, and $name_{label}$ denotes a Label name.

A set of cluster identification tags assigned the cluster ID (cid) is defined as ClusterTagSet as shown in Equation 5.

[Equation 5]

$$ClusterTagSet = \{(ctag, cid)\}$$

A set of security policies is defined as SP as shown in Equation 6.

[Equation 6]

$$SP = \{sp_{spid} \mid 1 \leq spid \leq k\}$$

Here, $sp_{spid}$ denotes a security policy, and spid denotes a security policy ID.

A security policy ID assigned to the cluster ($C_{cid}$) is defined as ClusterSPID$_{cid}$ as shown in Equation 7.

[Equation 7]

$$ClusterSPID_{cid} \text{ where } 0 \leq ClusterSPID_{cid} \leq k$$

Here, when a value of ClusterSPID$_{cid}$ is 0, it indicates that no security policy is assigned to the cluster ($C_{cid}$).

A set of cluster IDs of the process ($P_{pid}$) is defined as ProcCIDSet$_{pid}$ as shown in Equation 8.

[Equation 8]

$$ProcCIDSet_{pid} = \{i \mid C_i \in C, \; p_j \in ClusterPSet_i, \; 1 \leq i \leq m, \; j = pid\}$$

Here, i denotes a cluster ID.

A set of security policies applied to a process ($P_{pid}$) is defined as ProcSPSet$_{pid}$ as shown in Equation 9.

[Equation 9]

$$ProcSPSet_{pid} = \{sp_i \mid sp_i \in SP, i = ClusterSPID_{cid}, cid \in ProcCIDSet_{pid}\}$$

The security policy management unit 14 assigns a security policy (sp$_{spid}$) to a cluster by applying an assignSP() function as shown in Equation 10, and removes the security policy assigned to the cluster by applying a revokeSP() function as shown in Equation 11.

[Equation 10]

$$assignSP(ctag, spid) \; begin$$

$$cid' \; \leftarrow getCID(ctag);$$

$$if \; cid' = 0 \; begin \; /* \; if \; no \; cluster \; ID \; is \; retrieved, \; create \; a \; cluster \; */$$

$$cid' \leftarrow genCID(ctag);$$

$$end;$$

$$ClusterSPID_{cid'} \leftarrow spid;$$

$$end.$$

[Equation 11]

$$revokeSP(ctag) \; begin$$

$$cid' \; \leftarrow getCID(ctag);$$

$$if \; cid' \neq 0 \; begin$$

$$ClusterSPID_{cid'} \leftarrow 0;$$

$$deleteCID(cid');$$

$$end;$$

$$end.$$

The kernel layer 20 clusters, according to the container attribute information, a container initial process created in response to a container execution request of a container engine and all processes created within the container.

The kernel layer 20 performs access control on all behaviors of the processes within the container according to a security policy set for each cluster.

The kernel layer 20 includes a system call interface unit 21, a process creation unit 22, a security kernel unit 23, and an OS kernel unit 24. Operations of the respective component will be described below.

The system call interface unit 21 provides an interface for system calls and responses thereto between the application layer 10 and the kernel layer 20.

The process creation unit 22 creates an initial process of the container in response to a container execution request of the container engine, or creates a process when a process creation request is made within the container.

The security kernel unit 23 monitors system calls generated by the container engine 12 through the system call interface unit 21 to detect the execution and termination of the container.

Upon detecting container execution, the security kernel unit 23 acquires, through the process creation unit 22, a container initial process created for the container 11 requested to be executed.

When a container initial process is created, the security kernel unit 23 acquires container attribute information through the container operation environment monitoring unit 13, and then clusters the container into a cluster created according to the container attribute information via the container clustering unit 122. In addition, the security kernel unit 23 clusters all processes within inside the container according to the container attribute information.

The security kernel unit 23 performs access control on all behaviors of the processes within the container according to the security policy set for the cluster.

The OS kernel unit 24 interfaces with the hardware layer 30, which includes hardware for storing the information resources, under the access control of the security kernel unit 23.

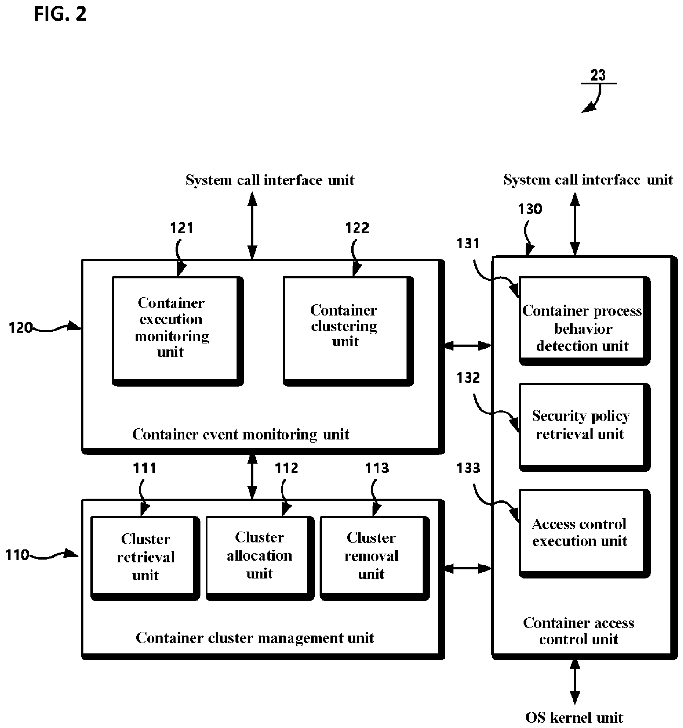

FIG. 2 is a diagram illustrating a configuration of a security kernel unit of a kernel layer in a container-based cloud access control system according to the present disclosure.

Referring to FIG. 2, the security kernel unit 23 includes a container cluster management unit 110, a container event monitoring unit 120, and a container access control unit 130.

The container cluster management unit 110 includes a cluster retrieval unit 111, a cluster allocation unit 112, and a cluster removal unit 113.

The cluster retrieval unit 111 performs retrieval of a cluster by applying a getCID() function as shown in Equation 12 when a cluster retrieval request based on container attribute information is received from either the container event monitoring unit 120 or the security policy management unit 14.

[Equation 12]

$$getCID(ctag) \ begin$$

$$cid' \leftarrow 0;$$

$$if \ \exists (x, y) \in ClusterTagSet \ where \ x = ctag \ begin$$

$$cid' \leftarrow y; \ /\!* \ Retrieved \ cluster \ ID \ *\!/$$

$$end;$$

$$return(cid');$$

$$end.$$

The cluster allocation unit 112 creates a cluster by applying a genCID() function as shown in Equation 13 when it is confirmed, through the cluster retrieval unit 111, that no cluster is retrieved.

[Equation 13]

$$genCID(ctag) \ begin \ /*Cluster \ ID \ creation \ function*/$$

$$cid' \leftarrow generate \ unique \ cid;$$

$$ClusterTagSet \leftarrow ClusterTagSet \ \cup \ \{(ctag, cid')\};$$

$$ClusterSPID_{cid'} \leftarrow 0 \ ;$$

$$ClusterPSet_{cid'} \leftarrow \emptyset \ ;$$

$$return(cid'); \ /* \ Return \ the \ assigned \ cluster \ ID \ */$$

$$end.$$

The cluster removal unit 113 removes a corresponding cluster when termination of the container 11 is detected through the container execution monitoring unit 121 of the container event monitoring unit 120. Cluster removal is performed by applying a deleteCID() function as shown in Equation 14, and the corresponding cluster is removed when the cluster is no longer used (when no security policy is assigned to the cluster and no processes are included in the cluster).

[Equation 14]

$$deleteCID(cid) \ begin$$

$$if \ \exists(x,y) \in ClusterTagSet \ where \ y = cid \ begin$$

$$/* \ Remove \ the \ cluster \ ID \ if \ the \ cluster \ is \ no \ longer \ used \ */$$

$$if \ ClusterPSet_{cid} = \emptyset \ \wedge \ ClusterSPID_{cid} = 0 \ begin$$

$$ClusterTagSet \leftarrow ClusterTagSet - \{(x, cid)\};$$

$$end;$$

$$end;$$

$$end.$$

The container event monitoring unit 120 includes a container execution monitoring unit 121 and a container clustering unit 122.

The container execution monitoring unit 121 monitors, through the system call interface unit 21, system calls generated by the container engine 12 to detect the execution and termination of the container.

The container clustering unit 122 acquires the container attribute information through the container operation environment monitoring unit 13.

When the container attribute information is acquired, the container clustering unit 122 controls the cluster allocation unit 112 of the container cluster management unit 110 to cluster the container initial process and all processes created within the container according to the container attribute information.

It is preferable that the container clustering unit 122 be configured to determine, through the cluster retrieval unit 111 of the container cluster management unit 110, whether a cluster created in advance for the container 11 exists before creating a new cluster, and if such a cluster exists, not to create a new cluster, and if such a cluster does not exist, to create a new cluster.

In addition, when the termination of the container is detected, the container clustering unit 122 controls the cluster removal unit 113 of the container cluster management unit 110 to remove the corresponding cluster.

The container access control unit 130 includes a container process behavior detection unit 131, a security policy retrieval unit 132, and an access control execution unit 133.

The container process behavior detection unit 131 monitors the system call interface unit 21 to detect occurrence of behavior events of all processes within the container (process creation, process termination, network traffic transmission and reception, command and program execution, file system access, process signal reception, process forced termination, file system sharing and shared file system access, system resource use, etc.), and performs cluster-related tasks through the container clustering unit 122 when a process is created or terminated.

The security policy retrieval unit 132 loads and retrieves security policies for each cluster from the hardware layer 30.

The access control execution unit 133 performs access control on all behaviors of the processes within the container according to the security policies retrieved through the security retrieval query unit 132.

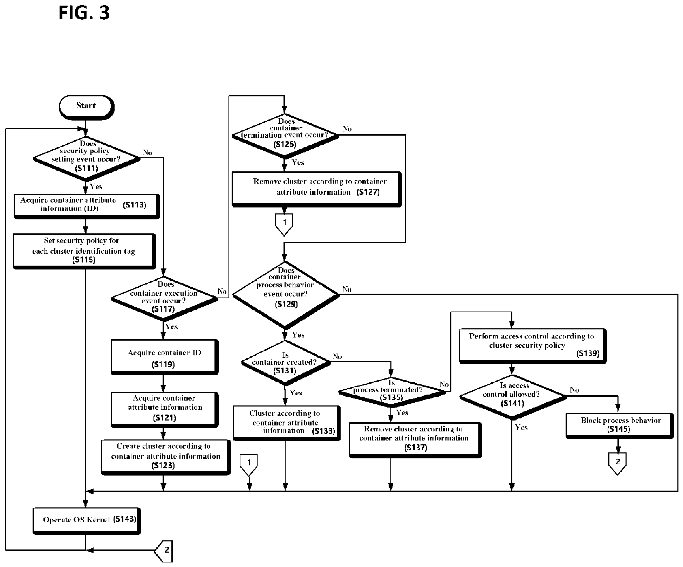

FIG. 3 is a flowchart illustrating a container-based cloud access control method according to the present disclosure.

Referring to FIG. 3, the security policy management unit 14 of the application layer 10 monitors whether a security policy setting event occurs (S111). The security policy setting event may occur in response to a request from an administrator via the hardware layer 30 and the kernel layer 20.

Since an initial security policy must be set, the security policy setting process will be described first.

When a security policy setting event occurs, the security policy management unit 14 acquires the container attribute information for the container 11 configured in the application layer 10 through the container operation environment monitoring unit 13 (S113). The container attribute information includes a container ID, a container image ID, a Pod name, a Label name, etc., which represent container-related information of a process created in a container environment.

The security policy management unit 14 assigns a security policy to each cluster according to container attribute information by Equation 10 (S115).

After the security policy is set, the security kernel unit 23 monitors system calls of the system call interface unit 21 to determine whether a container execution event is generated from the container engine 12 of the application layer 10 (S117).

When a container execution event occurs due to the execution of the initial container 11, the security kernel unit 23 creates a container initial process through the process creation unit 22 via the system call interface unit 21. When execution of the container 11 is requested through a low-level container runtime responsible for container execution of the container engine 12 via the container execution monitoring unit 121 of the container event monitoring unit 120, the security kernel unit 23 acquires the container ID by searching /proc/processID/cgroup information based on the parameters and a process ID (pid) of the low-level container runtime (S119).

When the container is created, the container clustering unit 122 of the security kernel unit 23 acquires the container attribute information from the container operation environment monitoring unit 13 (S121).

When the container attribute information is acquired, the container clustering unit 122 determines whether a previously created cluster exists through the cluster retrieval unit 111. If a previously created cluster exists, the container clustering unit 122 does not create a new cluster, and if such a cluster does not exist, the container clustering unit 122 creates a new cluster through the cluster allocation unit 112 (S123).

The process of S123 may be performed by applying Equation 15.

[Equation 15]

$$createContainer(pid)\ begin$$

/* Acquire cluster ID according to container-related identification information of parent process */

$$ProcCIDSet_{pid} \leftarrow \emptyset\ ;$$

$$for\ \forall ctag' \in getCTAG(pid)\ begin$$

$$cid'\ \leftarrow getCID(ctag');$$

$$if\ cid' = 0\ begin\ /*\ if\ no\ cluster\ ID\ is\ retrieved,\ create\ a\ cluster\ */$$

$$cid' \leftarrow genCID(ctag');$$

$$end;$$

$$ProcCIDSet_{pid} \leftarrow ProcCIDSet_{pid}\ \cup\ \{cid'\};$$

$$ClusterPSet_{cid'} \leftarrow ClusterPSet_{cid'}\ \cup\ \{p_{pid}\};$$

$$end;$$

$$end.$$

Here, getCTAG(pid) is a function that acquires a cluster identification tag (ctag) of a process ($p_{pid}$).

The security kernel unit 23 monitors system calls of the system call interface unit 21 to determine whether a container termination event is generated from the container engine 12 of the application layer 10 (S125).

When the container termination event occurs, the cluster corresponding to attribute information of the container is removed (S127). The process of S127 may be performed by applying Equation 16.

[Equation 16]

$$exitProcess(pid)\ begin$$

$$for\ \forall cid' \in ProcCIDSet_{pid}\ begin$$

$$ClusterPSet_{cid'} \leftarrow ClusterPSet_{cid'} - \{p_{pid}\};$$

$$deleteCID(cid');$$

$$end;$$

$$end.$$

The security kernel unit 23 monitors system calls of the system call interface unit 21 to determine whether an event corresponds to a process behavior (including process creation, process termination, network traffic transmission and reception, command and program execution, file system access, process signal reception, process forced termination, file system sharing and access to a shared file system, system resource usage, etc.) within the container (S129).

When it is determined that a process behavior event has occurred, the security kernel unit 23 determines whether the process behavior event is a process creation event (S131) or a process termination event (S135).

If the process behavior event is a process creation event (S131), the security kernel unit 23 clusters the process based on container attribute information of the container 11 (S133).

This may be defined as shown in Equation 17.

[Equation 17]

$$createProcess(pid, ppid) \ begin$$

$$ProcCIDSet_{pid} \leftarrow ProcCIDSet_{ppid};$$

$$for \ \forall cid' \in ProcCIDSet_{pid} \ begin$$

$$ClusterPSet_{cid'} \leftarrow ClusterPSet_{cid'} \cup \{p_{ppid}\};$$

$$end;$$

$$end.$$

Equation 17 defines a clustering process in which, when a process ($P_{pid}$) is created inside the container 11, the process is clustered by inheriting the cluster of the parent process ($P_{ppid}$, ppid is the parent process ID).

If the process behavior event is a process termination event, the security kernel unit 23 performs removal of a cluster of the corresponding process by applying Equation 16 (S137).

If the above process behavior event corresponds to an event including network traffic transmission and reception, command and program execution, file system access, process signal reception, process forced termination, file system sharing and shared file system access, system resource use, etc., the security kernel unit 23 performs access control according to the security policy set for the cluster of the process (S139). The security policy may be modified and set by the administrator.

If the access control determination result indicates that the corresponding process behavior is allowed (S141), the security kernel unit 23 processes an OS kernel operation for the corresponding process behavior through the OS kernel unit 24 (S143). Otherwise, the security kernel unit 23 blocks the corresponding process behavior (S145).

Meanwhile, it will be readily understood by those skilled in the art that the present disclosure is not limited to the above-described typical preferred embodiments, but can be implemented by improving, changing, replacing or adding in various ways without departing from the gist of the present disclosure. If the implementation by such improvement, change, replacement or addition falls within the scope of the appended claims, the technical idea thereof shall also be considered to belong to the present disclosure.

<Explanation of Symbols>

| 10: | Application layer | 11: | Container |
|---|---|---|---|
| 12: | Container engine | 13: | Container operation environment monitoring unit |
| 14: | Security policy management unit | 20: | Kernel layer |
| 21: | System call interface unit | 22: | Process creation unit |
| 23: | Security kernel unit | 24: | OS kernel unit |
| 30: | Hardware layer | 110: | Container cluster management unit |
| 111: | Cluster retrieval unit | 112: | Cluster allocation unit |
| 113: | Cluster removal unit | 120: | Container event monitoring unit |
| 121: | Container execution monitoring unit | 122: | Container clustering unit |
| 130: | Container access control unit | 131: | Container process behavior detection unit |
| 132: | Security policy retrieval unit | 133: | Access control execution unit |

**Claims**

1.   A container-based cloud access control system, including one or more containers executed by a container image, and a container engine configured to assign Pods and Labels to the containers, and to deploy and manage at least one of the containers or the Pods, comprising:

an application layer including one or more containers and a container engine, and configured to collect and manage container attribute information related to both the containers and the Pods through the container engine, set security policies for clusters corresponding to the container attribute information, and perform an execution request for an arbitrary container through the container engine; and

a kernel layer configured to cluster, according to the container attribute information, a container initial process created in response to the container execution request and all processes created within the container, and perform access control on behaviors of all processes within the container according to the security policy set for each cluster.

2. The container-based cloud access control system of claim 1, wherein the container attribute information comprises a container ID, a container image ID, a Pod name, and a Label name, which represent container-related information of a process in a container environment, and
wherein the application layer comprises:

the one or more containers;
the container engine;
a container operation environment monitoring unit configured to collect and manage the container attribute information for one or more containers executed through the container engine; and
a security policy management unit configured to collect information about clusters created through the kernel layer when a security policy setting event occurs, and set a security policy for each cluster by receiving input from an administrator.

3. The container-based cloud access control system of claim 2, wherein the kernel layer comprises:

a system call interface unit configured to provide an interface for system calls and responses thereto between the application layer and the kernel layer;
a process creation unit configured to create a process when a container execution event is generated by the container engine through the system call interface unit, or when a process creation event occurs within the container;
a security kernel unit configured to monitor the system call interface unit to detect container execution and termination requests from the container engine, cluster all processes created through the process creation unit within the container, according to the container attribute information acquired through the container operation environment monitoring unit, and perform access control on all behaviors of the processes within the container according to the security policy set for each cluster; and
an OS kernel unit configured to interface with a hardware layer comprising hardware that stores information resources according to access control of the security kernel unit.

4. The container-based cloud access control system of claim 3, wherein the security kernel unit comprises:

a container cluster management unit configured to manage creation and removal of clusters;
a container event monitoring unit configured to monitor system calls generated by the container engine through the system call interface unit to detect execution and termination of the container, cluster all the processes created through the process creation unit within the container, according to the container attribute information acquired through the container operation environment monitoring unit, and remove the cluster when the container is terminated; and
a container access control unit configured to perform access control on all the behaviors of the processes within the container according to the security policy set for each cluster.

5. The container-based cloud access control system of claim 4, wherein the container cluster management unit comprises:

a cluster allocation unit configured to create a cluster in response to control by the container event monitoring unit;
a cluster removal unit configured to remove a cluster in response to control by the container event monitoring unit; and
a cluster retrieval unit configured to retrieve and return a cluster according to container attribute information in response to a cluster retrieval request from either the container event monitoring unit or the security policy management unit.

6. The container-based cloud access control system of claim 4, wherein the container event monitoring unit comprises:

a container execution monitoring unit configured to monitor the system call interface unit and detect container execution and termination requests from the container engine; and
a container clustering unit configured to cluster all the processes created through the process creation unit within the container, according to the container attribute information acquired through the container operation environment monitoring unit

7. The container-based cloud access control system of claim 4, wherein the container access control unit comprises:

a container process behavior detection unit configured to monitor the system call interface unit to detect creation and termination of processes within the container and behavior events of the processes, and perform clustering through the container clustering unit when a process is created or terminated;
a security policy retrieval unit configured to load and retrieve the security policy for each cluster from the hardware layer; and
an access control execution unit configured to perform access control according to the security policy for each cluster when behavior events of the processes within the container occur.

8. A container-based cloud access control method performed in a system including one or more containers executed by a container image and a container engine configured to assign Pods and Labels to the containers, and to deploy and manage at least one of the containers or the Pods, the container-based cloud access control method comprising:

a security policy setting process in which an application layer including one or more containers and the container engine collects and manages container attribute information related to both the containers and the Pods through the container engine, and sets security policies for clusters corresponding to the container attribute information;
a clustering process in which a security kernel unit of a kernel layer clusters, according to the container attribute information, a container initial process created in response to a container execution request and all processes created within the container through a container event monitoring unit; and
an access control process in which the security kernel unit of the kernel layer performs access control on behaviors of all processes within the container according to the security policy set for each cluster through a container access control unit.

9. The container-based cloud access control method of claim 8, wherein the container attribute information comprises a container ID, a container image ID, a Pod name, and a Label name, which represent container-related information of a process in a container environment, and
wherein the security policy setting process comprises:

a container operation environment monitoring step in which the application layer collects and manages the container attribute information for one or more containers executed by the container engine through a container operation environment monitoring unit; and
a security policy setting step in which the application layer sets the security policy for each cluster, through a security policy management unit, by receiving input from an administrator when a security policy setting event occurs.

10. The container-based cloud access control method of claim 9, wherein the clustering process comprises:

a process creation step in which the kernel layer creates a process by a process creation unit when a container execution event is generated by the container engine through a system call interface unit or when a process creation event occurs within the container; and
a clustering step in which the security kernel unit of the kernel layer monitors the system call interface unit to detect container execution and termination requests from the container engine, and clusters all processes created through the process creation unit within the container, according to the container attribute information acquired through the container operation environment monitoring unit.

11. The container-based cloud access control method of claim 10, wherein the clustering step comprises:

a container execution detection step in which the security kernel unit detects container execution from the container engine through the system call interface unit;

a process creation detection step in which the security kernel unit detects creation of all processes within the container;

a container attribute information acquisition step in which the security kernel unit acquires container attribute information for all the processes through the container operation environment monitoring unit;

a cluster creation step in which the security kernel unit clusters all the processes according to the acquired container attribute information; and

a cluster removal step in which the security kernel unit remove the cluster through a container cluster management unit when container termination is detected through a container execution monitoring unit.

12. The container-based cloud access control method of claim 8, wherein the access control process comprises:

a container process behavior detection step in which a container process behavior detection unit of the container access control unit monitors creation and termination of all processes within the container and occurrence of behavior events of the processes through the system call interface unit;

a security policy retrieval step in which a security policy query unit of the container access control unit loads and retrieves a security policy for each cluster from a hardware layer; and

an access control execution step in which access control is performed according to the security policy for each cluster when behaviors of the processes within the container occur, thereby allowing or blocking corresponding process behaviors.

**Fig. 1**

**FIG. 2**

System call interface unit                    System call interface unit

**23**

**121**                    **122**            **130**

**131**

**120**

Container
execution
monitoring
unit

Container
clustering
unit

Container process
behavior
detection unit

**132**

Security policy
retrieval unit

Container event monitoring unit

**133**

**111**        **112**        **113**

Access control
execution unit

**110**

Cluster
retrieval
unit

Cluster
allocation
unit

Cluster
removal
unit

Container access
control unit

Container cluster management unit

OS kernel unit

## FIG. 3